# EUROPEAN PATENT APPLICATION

(11) **EP 4 541 251 A1**
(43) Date of publication of application: **23.04.2025**
(21) Application number: 23831755.6
(22) Date of filing: 05.06.2023
(51) Int. Cl.: A47L 11/40, H02J 7/00

(54) **CLEANER**

(30) Priority: 28.06.2022 KR 20220079019
(71) Applicant: LG Electronics Inc., Yeongdeungpo-gu Seoul 07336 (KR)
(72) Inventor: JANG, Jaewon, Seoul 08592 (KR); LEE, Minwoo, Seoul 08592 (KR); CHAE, Aekyung, Seoul 08592 (KR); LEE, Yeongjae, Seoul 08592 (KR)
(74) Representative: Vossius & Partner Patentanwälte Rechtsanwälte mbB
(86) International application number: PCT/KR2023/007698
(87) International publication number: WO 2024/005395

(57) **Abstract**

The present disclosure relates to a cleaner including: a cleaner body including a battery and a handle gripped by a user; a cleaning module which is detachably coupled to the cleaner body and removes foreign substances on a floor surface; an auxiliary battery housing which is detachably coupled to the cleaning module; and an auxiliary battery which is detachably coupled to the auxiliary battery housing and supplies power to the cleaner body or the cleaning module. **In** the process of separating the auxiliary battery and the cleaning module, the direction in which the user presses the button coincides with the direction in which the user pulls the auxiliary battery, so that the user can easily separate the auxiliary battery with a single operation.

## Description

### [Technical Field]

The present disclosure relates to a cleaner where a cleaning module which sucks or wipes dust or foreign substances in a cleaning target area by discharging water to a mop can be attached thereto and detached therefrom.

### [Background Art]

A cleaner is a device which performs cleaning by sucking or wiping dust or foreign substances in a cleaning target area.

Such a cleaner can be divided into a manual cleaner which performs cleaning by being moved directly by a user and an automatic cleaner which performs cleaning while travels by itself.

The hand vacuum cleaner has the maximized portability, and thus, has a light weight and a short length. Therefore, the cleaning area of the cleaner may be limited. Accordingly, the hand vacuum cleaner is used to clean a local place such as on a desk or sofa, the inside of a vehicle.

The stick vacuum cleaner allows a user to use itself with a standing posture, and thus, the cleaning can be made without bending his/her waist forward. Accordingly, it is advantageous for cleaning while moving over a wide area. While the handy vacuum cleaner cleans a narrow space, the stick vacuum cleaner is able to clean a wider space than the narrow space and to clean a high place out of reach. Recently, the stick vacuum cleaner is provided in the form of a module, so that the type of the cleaner is actively changed according to various objects.

A method for cleaning a floor is mainly divided into dry cleaning and wet cleaning. The dry cleaning is performed by sweeping or sucking dust, and a conventional vacuum cleaner falls into the dry cleaning. The wet cleaning is performed by wiping off dust with a mop. In addition, there is a method for sterilizing and cleaning by generating and spraying high-temperature steam during the wet cleaning.

Recently, as various materials are used in construction, cleaning methods are also being diversified. In the past, since the floor was mainly composed of a wood material, the wet cleaning is impossible and only the dry cleaning has been performed. However, in recent years, the floor is composed of various materials such as a steel plate or marble, which can also be wet-cleaned.

In the past, a dry cleaner has been used for the dry cleaning, and a wet cleaner has been used for the wet cleaning. However, there was an inconvenience to have to purchase the two types of the cleaners in order to clean various floors. In order to solve the above problems, research has been conducted to a method in which a main body, a dry-cleaning module and a wet cleaning module are provided, the dry-cleaning module is mounted on the main body in order to perform the dry cleaning, and the wet cleaning module is mounted on the main body in order to perform the wet cleaning.

The wet cleaning module includes a bucket for storing water, a heater for heating water to generate steam, and a mop for wiping the floor by receiving the water or steam. It is preferable that the respective parts are configured as one assembly in order to make it easy to replace the parts. For example, in the case of the cleaner including the bucket or heater disposed on the main body, if the dry-cleaning module is mounted on the main body, cleaning becomes inconvenient due to the unnecessary parts. For this reason, it is desirable that the bucket or heater should be disposed on the wet cleaning module instead of the main body, in terms of ease of both cleaning and module replacement as well as space utilization.

Korean Registered Utility Model No. KR0489070Y1 discloses a wet mop cleaner in which a main battery is provided in a cleaning module and an auxiliary battery is detachably coupled to an extension tube.

However, since the wet mop cleaner cannot suck dust and uses most of power to rotate the mop, coupling the auxiliary battery increases simply the time of use of the cleaner.

In addition, in the cleaner that wipes the floor by rotating the mop as described above, when foreign substances adhere to the floor, the foreign substances may still remain even when the floor is wiped by rotating the water-absorbed mop.

In addition, when microorganisms are propagated on the floor, there is a limit in that the microorganisms cannot be completely sterilized even if the floor is wiped by rotating the water-absorbed mop.

In order to solve this problem, a method of heating the water supplied to the mop can be considered. However, when a heater that uses much power to heat water is additionally attached to the cleaning module, it is necessary to supply a large amount of power to the cleaning module.

Korean Patent No. KR0738478B1 shows a cleaner capable of steam cleaning and dust suction.

In the above cleaner, a steam cleaner and a vacuum cleaner can be coupled to each other, and the steam cleaner supplies power to the vacuum cleaner.

However, since the above cleaner supplies power on the basis of the steam cleaner that uses a large amount of power, the cleaner must be supplied with power in a wired manner or use a large battery. For this reason, the cleaner is difficult to apply to a hand vacuum cleaner.

Therefore, when heating water, the cleaning module must be supplied with much power, and at the same time, a total available time for cleaning of the cleaner needs to be maintained.

In addition, it is necessary to enable the user to easily and conveniently connect and disconnect the auxiliary battery in the process of attaching and detaching the auxiliary battery as needed.

### [Technical Problem]

The embodiments of the present disclosure is designed to overcome the problems of the above-mentioned conventional cleaner to which a cleaning module equipped with a steam generator is detachably coupled. The purpose of the present disclosure is to provide a cleaner that increases a total battery capacity.

The purpose of the present disclosure is to provide a cleaner that increases a sterilization effect and a foreign substance removal effect by supplying high-temperature water or steam to a mop.

The purpose of the present disclosure is to provide a cleaner that can be easily operated while supplying additional power.

The purpose of the present disclosure is to provide a cleaner capable of stably supplying power when steam is generated by the cleaning module.

The purpose of the present disclosure is to provide a cleaner which enables a user to easily connect and disconnect an auxiliary battery.

The purpose of the present disclosure is to provide a cleaner capable of preventing interference between the auxiliary battery and the cleaning module during a cleaning process.

The purpose of the present disclosure is to provide a cleaner capable of reducing a force required for the user's wrist or arm when the user controls the cleaning module.

### [Technical Solution]

One embodiment is a cleaner including: a cleaner body including a battery and a handle gripped by a user; a cleaning module which is detachably coupled to the cleaner body and removes foreign substances on a floor surface; an auxiliary battery housing which is detachably coupled to the cleaning module; and an auxiliary battery which is detachably coupled to the auxiliary battery housing and supplies power to the cleaner body or the cleaning module.

Here, the auxiliary battery housing may include: an auxiliary battery receiver in which an auxiliary battery receiving groove into which the auxiliary battery is inserted is formed; and a stopper which is provided in the auxiliary battery receiver in such a manner as to be able to perform a linear reciprocating motion and prevents the auxiliary battery receiver from being separated when coupled to the cleaning module.

Also, the auxiliary battery housing may include a release button which is provided in the auxiliary battery receiver in such a manner as to be able to perform a linear reciprocating motion and moves the stopper when an external force is applied.

Here, the release button may include: a button portion to which an external force is applied; a protruding portion which protrudes from the button portion and extends in a direction crossing a longitudinal direction of the stopper; and an inclined surface which is formed on the protruding portion, forms a predetermined angle with the extending direction of the protruding portion, and comes into contact with the stopper.

Here, the stopper may perform a linear reciprocating motion according to the upward movement of the inclined surface.

Meanwhile, the stopper may include: a hook portion which comes into contact with the cleaning module; and a moving portion which is connected to the hook portion and comes into contact with the release button.

Meanwhile, the auxiliary battery housing may include a coupling portion which is formed to protrude from the auxiliary battery receiver and is coupled to the cleaning module.

Here, the coupling portion may include a first coupling portion including a terminal which is formed to protrude from the auxiliary battery receiver and is electrically connected to the cleaning module.

Also, the coupling portion may further include a second coupling portion which is formed to protrude from the auxiliary battery receiver and is connected to the first coupling portion.

Here, in order to increase a coupling force between the auxiliary battery housing and the cleaning module, a protrusion height of the first coupling portion may be greater than a protrusion height of the second coupling portion.

The hook portion may be exposed on one side of the auxiliary battery receiver from which the second coupling portion is formed to protrude.

Therefore, a battery connecting portion of the cleaning module is fitted and fixed between the second coupling portion and the hook portion.

Meanwhile, the cleaning module may include a connecting tube which is coupled to the auxiliary battery housing. The connecting tube may include: a connecting tube body; and a battery connecting portion to which the auxiliary battery housing is coupled in a longitudinal direction of the connecting tube body.

Also, the connecting tube may include a hook receiving groove which is formed on a side wall of the battery connecting portion and receives the stopper.

Meanwhile, a direction in which the external force is applied to the release button may be parallel to a direction in which the auxiliary battery housing is separated from the cleaning module.

### [Advantageous Effects]

As described above, according to the cleaner according to the embodiment of the present disclosure, the auxiliary battery is installed to increase the total capacity of the battery.

In addition, there is an effect of increasing a sterilization effect and a foreign substance removal effect by supplying high-temperature water or steam to the mop through the heater.

In addition, there is an effect that the user can easily operate while additional power is supplied through the auxiliary battery.

In addition, the auxiliary battery supplies additional power to the heater, so that power can be stably supplied when the cleaning module generates steam.

In addition, in the process of separating the auxiliary battery and the cleaning module, the direction in which the user presses the button coincides with the direction in which the user pulls the auxiliary battery, so that the user can easily separate the auxiliary battery with a single operation.

Also, since the auxiliary battery is disposed at a predetermined distance from the cleaning module, it is possible to prevent interference between the auxiliary battery and the cleaning module during a cleaning process.

In addition, since the auxiliary battery is disposed on the connecting tube of the cleaning module, the load of the auxiliary battery is distributed over the entire cleaning module, so that the user can comfortably operate the cleaning module.

### [Description of Drawings]

FIG. 1 is a perspective view of a cleaner according to an embodiment of the present disclosure;
FIG. 2 is a perspective view for describing a cleaner body according to the embodiment of the present disclosure;
FIG. 3 is a cross-sectional view for describing the cleaner body according to the embodiment of the present disclosure;
FIG. 4 is an exploded perspective view for describing a cleaning module according to the embodiment of the present disclosure;
FIG. 5 is a perspective view showing the cleaning module without an upper housing according to the embodiment of the present disclosure;
FIG. 6 is a plan view of FIG. 5;
FIG. 7 is a bottom view of FIG. 5;
FIG. 8 is a side view of FIG. 5;
FIG. 9 is a view for describing a direction in which an auxiliary battery housing and the cleaning module are coupled in the cleaner according to the embodiment of the present disclosure;
FIG. 10 is a perspective view for describing the auxiliary battery housing in the cleaner according to the embodiment of the present disclosure;
FIG. 11 is a perspective view of FIG. 10 viewed from another direction;
FIG. 12 is a partial perspective view for describing a connecting tube in the cleaner according to the embodiment of the present disclosure;
FIG. 13 is a perspective view for describing a stopper and a release button of the auxiliary battery housing in the cleaner according to the embodiment of the present disclosure;
FIG. 14 is a perspective view for describing a state where the auxiliary battery housing and the cleaning module are coupled in the cleaner according to the embodiment of the present disclosure;
FIG. 15 is a perspective view for describing a state where the fixation of the auxiliary battery housing and the cleaning module is released by applying an external force to the release button in the cleaner according to the embodiment of the present disclosure; and
FIG. 16 is a perspective view for describing an auxiliary battery in the cleaner according to the embodiment of the present disclosure.

### [Mode for Invention]

Hereinafter, preferred embodiments of the present invention will be described in detail with reference to the accompanying drawings.

As the present invention can have various embodiments as well as can be diversely changed, specific embodiments will be illustrated in the drawings and described in detail. While the present invention is not limited to particular embodiments, all modification, equivalents and substitutes included in the spirit and scope of the present invention are understood to be included therein.

**In** the description of the present invention, while terms such as the first and the second, etc., can be used to describe various components, the components may not be limited by the terms mentioned above. The terms are used only for distinguishing between one component and other components. For example, the first component may be designated as the second component without departing from the scope of rights of the invention. Similarly, the second component may be designated as the first component.

The term of "and/or" includes a combination or one of a plurality of related items mentioned.

In the case where a component is referred to as being "connected" or "accessed" to another component, it should be understood that not only the component is directly connected or accessed to the other component, but also there may exist another component between them. Meanwhile, in the case where a component is referred to as being "directly connected" or "directly accessed" to another component, it should be understood that there is no component therebetween.

Terms used in the present specification are provided for description of only specific embodiments of the present invention, and not intended to be limiting. An expression of a singular form includes the expression of plural form thereof unless otherwise explicitly mentioned in the context.

In the present specification, it should be understood that the term "include" or "comprise" and the like is intended to specify characteristics, numbers, steps, operations, components, parts or any combination thereof which are mentioned in the specification, and intended not to previously exclude the possibility of existence or addition of at least one another characteristics.

Unless otherwise defined, all terms used herein including technical and scientific terms have the same meaning as commonly understood by one of ordinary skill in the art to which the present invention belongs. Terms, for example, commonly used terms defined in the dictionary, are to be construed to have exactly the same meaning as that of related technology in the context. As long as terms are not clearly defined in the present application, the terms should not be ideally or excessively construed as formal meaning.

Also, the embodiment is provided for giving those skilled in the art more complete description. Therefore, the shapes and sizes and the like of components of the drawings may be exaggerated for clarity of the description.

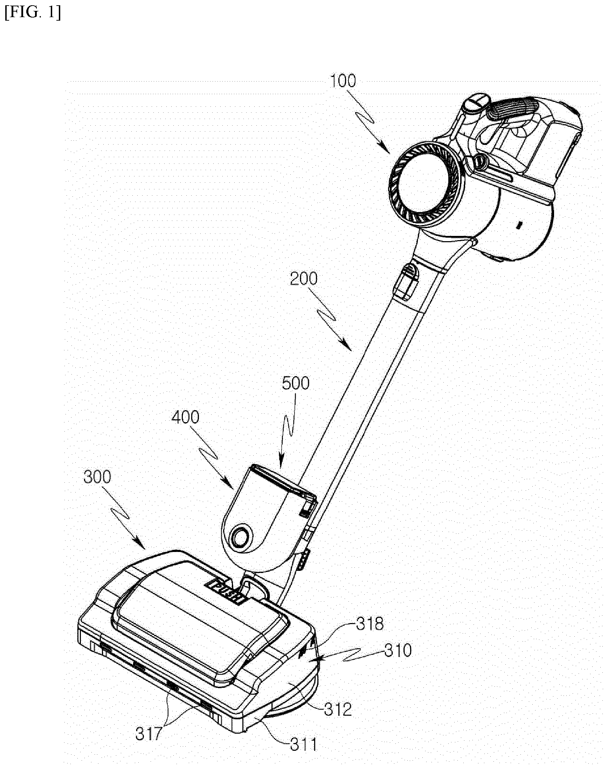

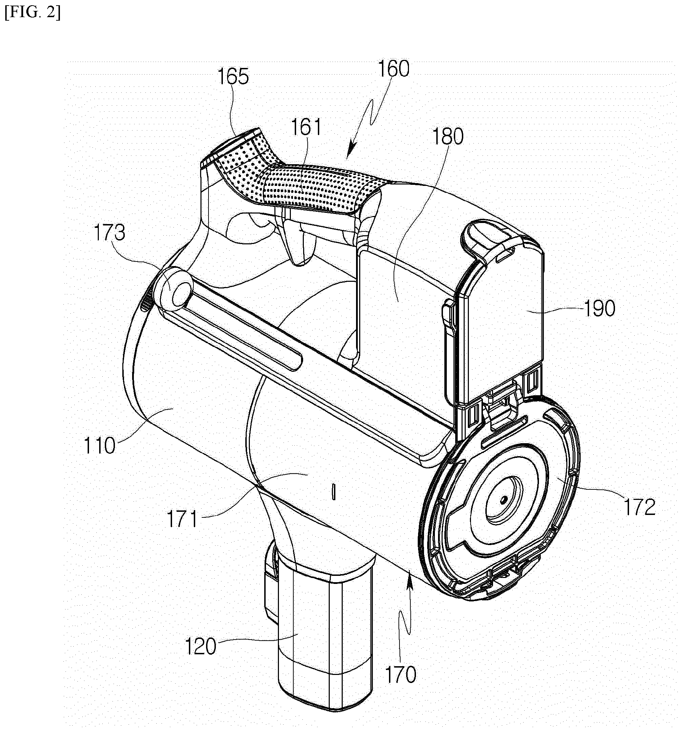

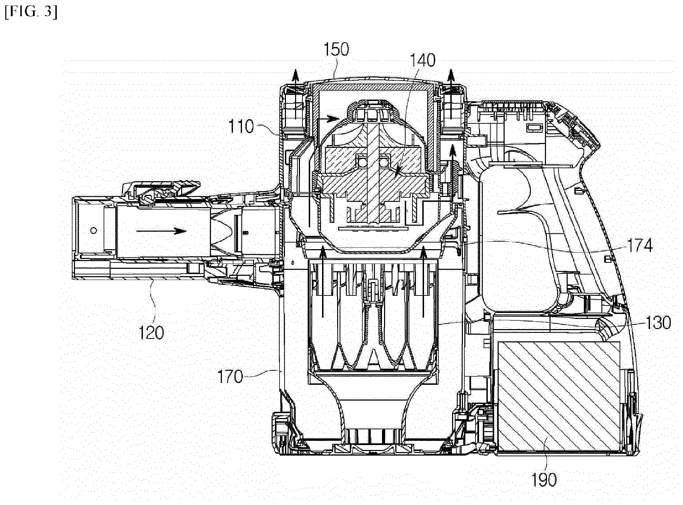

FIG. 1 is a perspective view of a cleaner according to an embodiment of the present disclosure. FIG. 2 is a perspective view for describing a cleaner body according to the embodiment of the present disclosure. FIG. 3 is a cross-sectional view for describing the cleaner body according to the embodiment of the present disclosure.

In this specification, "floor surface" may be understood to mean a cleaning surface such as a carpet, etc., as well as a floor of a living room or a room.

Referring to FIGS. 1 to 3, a cleaner 1 according to an embodiment of the present disclosure may include a cleaner body 100 having a suction motor 140 for generating a suction force, a cleaning module 300 which is connected to the cleaner body 100, sucks air and foreign substances on the floor surface, and wipes and cleans the floor surface, and an extension tube 200 which connects the cleaner body 100 and the cleaning module 300.

The structure of the cleaner body 100 will be described as follows.

Meanwhile, in the embodiment of the present disclosure, the direction of the cleaner can be defined based on when the bottom surface (lower surface) of a battery housing 180 and a dust bin 170 are placed on the ground.

Here, a front may refer to a direction in which a suction portion 120 is disposed with respect to the suction motor 140, and a rear may refer to a direction in which a handle 160 is disposed. Also, a direction in which a component is disposed on the right side based on when the suction portion 120 is viewed from the suction motor 140 may be referred to as a right side, and a direction in which a component is disposed on the left side may be referred to a left side. In addition, in the embodiment of the present disclosure, upper and lower sides may be defined along a direction perpendicular to the ground based on when the bottom surface (lower surface) of a battery housing 180 and the dust bin 170 are placed on the ground.

The cleaner 1 may include the cleaner body 100. The cleaner body 100 includes a body housing 110, the suction portion 120, a dust separator 130, the suction motor 140, an air discharge cover 150, the handle 160, the dust bin 170, the battery housing 180, and a battery 190.

The body housing 110 may form the exterior of the cleaner body 100. The body housing 110 may provide a space for receiving the suction motor 140 and a filter (not shown) therein. The body housing 110 may be formed in a shape similar to a cylinder.

The suction portion 120 may protrude outward from the body housing 110. For example, the suction portion 120 may be formed in a cylindrical shape with an open interior. The suction portion 120 may be coupled to the extension tube 200. The suction portion 120 may provide a flow path (hereinafter, may be referred to as a "suction flow path") through which air including dust can flow.

The dust separator 130 communicates with the suction portion 120 and is configured by applying a principle in which a dust collector uses a centrifugal force, in order to separate the dust sucked into the cleaner body 100 through the suction portion 120. A space within the dust separator 130 may communicate with a space within the dust bin 170.

For example, the dust separator 130 may include at least one cyclone capable of separating dust by cyclone flow. Also, the space within the dust separator 130 may communicate with the suction flow path. Accordingly, air and dust sucked through the suction unit 120 spirally flow along the inner circumferential surface of the dust separator 130. Thus, a cyclone flow may occur in the space within the dust separator 130.

The suction motor 140 may generate a suction force for sucking air. The suction motor 140 may be received within the body housing 110. The suction motor 140 may generate the suction force by rotation. For example, the suction motor 140 may be provided in a shape similar to a cylinder.

The air discharge cover 150 may be disposed on one side of the body housing 110 in the axial direction. A filter for filtering air may be received in the air discharge cover 150. For example, a HEPA filter may be received in the air discharge cover 150.

The handle 160 can be gripped by a user. The handle 160 may be disposed at the rear of the suction motor 140. For example, the handle 160 may be formed in a shape similar to a cylinder. Alternatively, the handle 160 may be formed in a curved cylindrical shape. The handle 160 may be disposed at a predetermined angle with the body housing 110, the suction motor 140, or the dust separator 130.

The handle 160 may include a grip portion 161 formed in a column shape for allowing the user to hold, a first extension portion which is connected to one longitudinal (axial) end of the grip portion 161 and extends toward the suction motor 140, and a second extension portion which is connected to the other longitudinal (axial) end of the grip portion 161 and extends toward the dust bin 170.

The top surface of the handle 160 may form a partial exterior of the top surface of the cleaner 1.

An operation unit 165 may be disposed on the handle 160. The operation unit 165 may be disposed on an inclined surface formed in a top area of the handle 160. The user can input an operation command or a stop command of the cleaner 1 through the operation unit 165.

The dust bin 170 may communicate with the dust separator 130. The dust bin 170 may store dust separated by the dust separator 130.

The dust bin 170 may include a dust bin body 171.

The dust bin body 171 may provide a space for storing the dust separated by the dust separator 130. For example, the dust bin body 171 may be formed in a shape similar to a cylinder.

For example, the dust bin body 171 may have a bottom surface that can be opened. **In** this case, a discharge cover 172 is provided on the bottom surface of the dust bin body 171 to selectively open the bottom surface of the dust bin body 171.

Meanwhile, according to the embodiment, the dust bin 170 may further include a dust bin compression lever 173 and a compressor 174.

The dust bin compression lever 173 may be disposed outside the dust bin 170 or the dust separator 130. The dust bin compression lever 173 may be disposed outside the dust bin 170 or the dust separator 130 and may move up and down. The dust bin compression lever 173 may be connected to the compressor 174. When the dust bin compression lever 173 moves downward by an external force, the compressor 174 may also move downward together. Through this, it is possible to provide user convenience. The compressor 174 and the dust bin compression lever 173 may return to their original positions by an elastic member (not shown). Specifically, when the external force applied to the dust bin compression lever 173 is removed, the elastic member may move the dust bin compression lever 173 and the compressor 174 upward.

The compressor 174 may be disposed within the dust bin body 171. The compressor 174 may move in an interior space of the dust bin body 171. Specifically, the compressor 174 may move up and down within the dust bin body 171. Through this, the compressor 174 may compress the dust in the dust bin body 171 downward. In addition, when the discharge cover 172 is separated from the dust bin body 171 and the lower portion of the dust bin 170 is opened, the compressor 174 moves from the upper portion to the lower portion of the dust bin 170, and then can remove foreign substances such as residual dust in the dust bin 170. Through this, residual dust is not intended to remain in the dust bin 170, so that the suction force of the cleaner can be improved. Also, the residual dust is not intended to remain in the dust bin 170, so that it is possible to remove odors generated by the residue.

The battery 190 may be received in the battery housing 180. The battery housing 180 may be disposed below the handle 160.

For example, the battery housing 180 may have a hexahedral shape with an open bottom. A rear surface of the battery housing 180 may be connected to the handle 160. In this case, the battery housing 180 may include a receiving portion that opens downward. With this configuration, the battery 190 is attachable to and detachable through the receiving portion of the battery housing 180.

As another example, the battery housing 180 may be provided integrally with the battery 190 received therein.

The battery 190 is a component for supplying power to the cleaner 1. Specifically, the battery 190 may supply power to the suction motor 140 and may supply power to electronic circuits and electronic components through wires embedded in the cleaner 1. Also, the battery 190 may supply power to the cleaning module 300.

When the battery 190 is coupled to the battery housing 180, the bottom surface of the battery 190 may be exposed to the outside. Since the battery 190 may be placed on the floor when the cleaner 1 is placed on the floor, the battery 190 can be directly separated from the battery housing 180. Also, since the bottom surface of the battery 190 is exposed to the outside and comes in direct contact with the external air of the battery 190, the cooling performance of the battery 190 can be improved.

Meanwhile, when the battery 190 is integrally fixed to the battery housing 180, the structure for attaching and detaching the battery 190 and the battery housing 180 can be reduced, so that the overall size of the cleaner 1 can be reduced and the weight of the cleaner 1 can be reduced.

The cleaner 1 may include the extension tube 200.

The extension tube 200 may be coupled to the cleaner body 100 and the cleaning module 300.

For example, the extension tube 200 may be formed in a cylindrical shape. Thus, an inner space of the extension tube 200 may communicate with an inner space of the cleaning module 300. Also, the extension tube 200 may communicate with the suction flow path formed in the suction portion 120 of the cleaner body 100.

When a suction force is generated by the suction motor 140, the suction force may be provided to the cleaning module 300 through the suction portion 120 and the extension tube 200. Accordingly, external dust and air may be introduced into the cleaner body 100 through the cleaning module 300 and the extension tube 200. In addition, the dust and air introduced through the cleaning module 300 may pass through the extension tube 200 and then may be introduced into the cleaner body 100. Also, the dust and air which have been introduced into the cleaner body 100 and have passed through the suction portion 120 are separated by the dust separator 130, and then the dust is stored in the dust bin 170 and the air is discharged to the outside through the air discharge cover 150.

Meanwhile, wires may be embedded in the extension tube 200. Accordingly, the cleaner body 100 and the cleaning module 300 may be electrically connected through the extension tube 200.

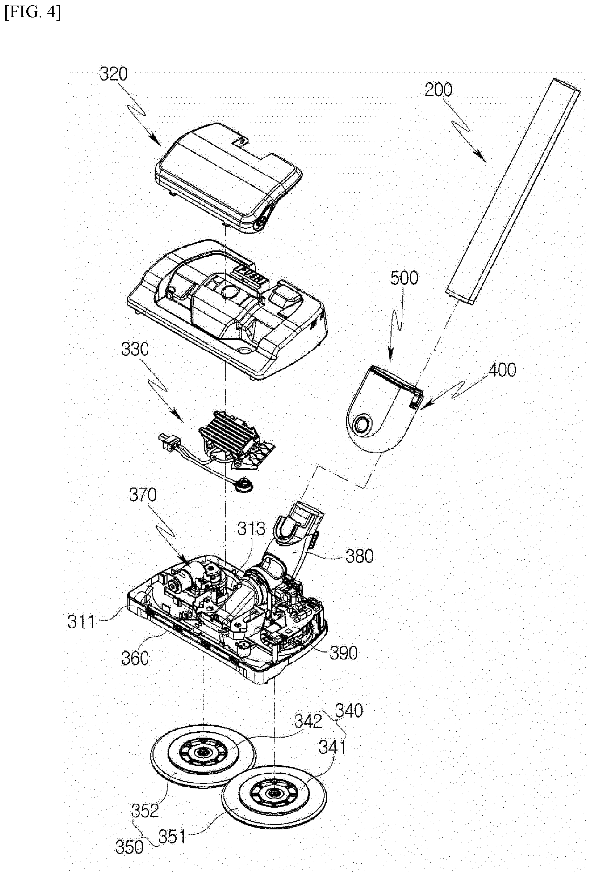

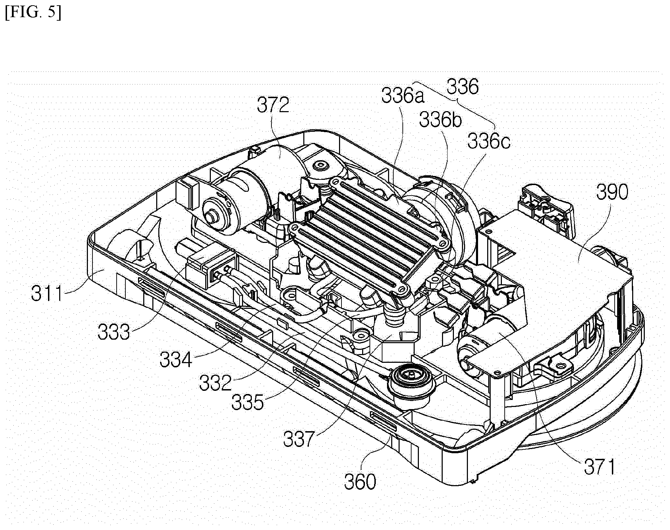

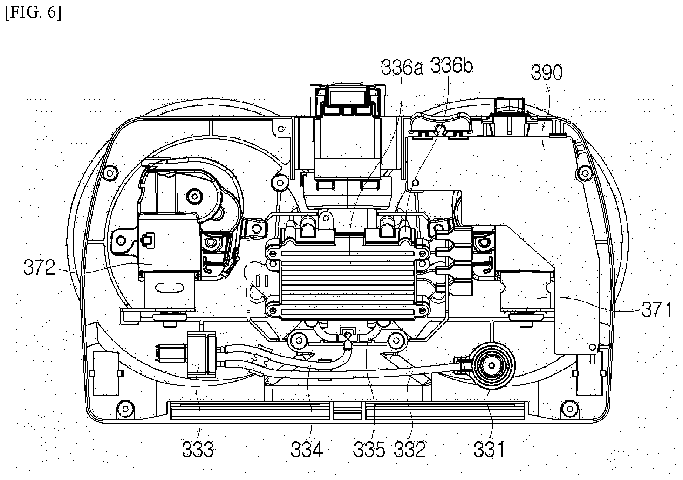

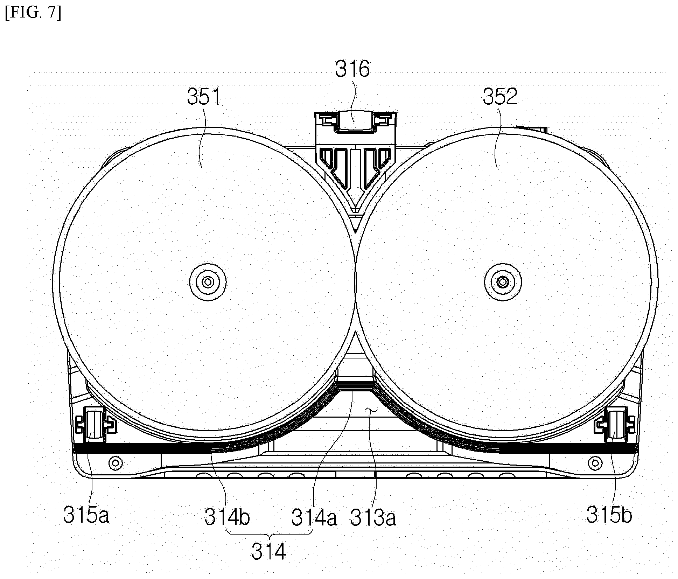

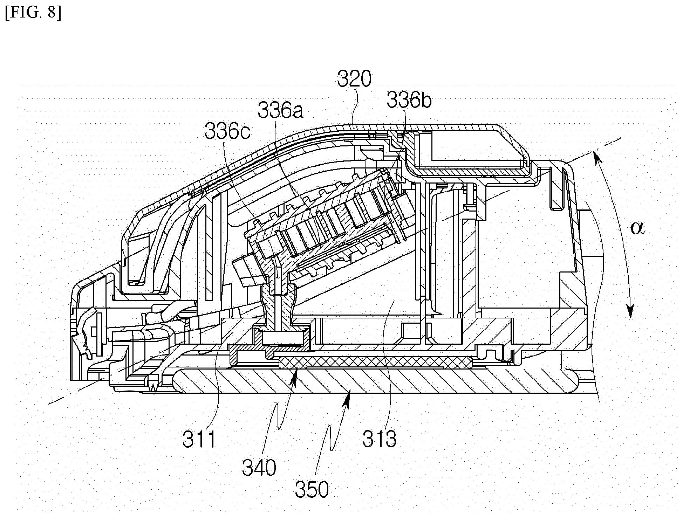

FIGS. 4 to 8 are views for describing the cleaning module according to the embodiment of the present disclosure.

Referring to FIGS. 4 to 8, the cleaning module 300 according to the embodiment of the present disclosure may include a module housing 310 and a connecting tube 380 which is movably connected to the module housing 310.

The cleaning module 300 of this embodiment may be, for example, connected to a hand vacuum cleaner and used.

That is, the cleaning module 300 may be detachably connected to the cleaner body 100 or the extension tube 200. Accordingly, as the cleaning module 300 is connected to the cleaner body 100 or the extension tube 200, the user is able to clean the floor surface by using the cleaning module 300. Here, the cleaner body 100 to which the cleaning module 300 is connected can separate dust in the air in a multi-cyclone way.

The cleaning module 300 may operate by receiving power from the cleaner body 100. Specifically, the cleaning module 300 may operate by receiving power from the battery 190 of the cleaner body 100.

Since the cleaner body 100 to which the cleaning module 300 is connected includes the suction motor 140, the suction force generated by the suction motor 140 is applied to the cleaning module 300 and the foreign substances and air on the floor surface can be sucked by the cleaning module 300.

Accordingly, in this embodiment, the cleaning module 300 may serve to suck the foreign substances and air on the floor surface and to guide them to the cleaner 1.

The connecting tube 380 may be connected to a rear central portion of the module housing 310 and may guide the sucked air to the cleaner body 100, and is not limited thereto.

Directions in the embodiment are defined as follows for ease of understanding. A portion of the cleaning module 300, to which the connecting tube 380 is connected may be referred to as a back side (rear side) of the cleaning module 300, and a portion opposite to the connecting tube 380 may be referred to as a foreside (front side) of the cleaning module 300.

In addition, based on when a suction port 313a is viewed from the connecting tube 380, a left side of a flow path forming part 313 may be referred to as a left side of the cleaning module 300, a right side of the flow path forming part 313 may be referred to as a right side of the cleaning module 300. Also, a direction that connects the left and right sides may be referred to as a left and right direction. The left and right direction may mean a direction which is perpendicular to a front and rear direction on a horizontal plane.

In addition, based on a state in which the cleaning module 300 is placed on the floor surface, that is, a state in which a mop 350 is placed on the floor surface and thus, can wipe the floor surface, a direction approaching the floor surface may be referred to as a downward direction, and a direction away from the floor surface may be referred to as an upward direction.

The cleaning module 300 may further include a rotating cleaning unit 340 which is rotatably provided below the module housing 310.

For example, the rotating cleaning unit 340 may be provided in the form of a pair and arranged in the left and right direction. Here, the pair of rotating cleaning units 340 may rotate independently. For example, the rotating cleaning unit 340 may include a first rotating cleaning unit 341 and a second rotating cleaning unit 342.

The rotating cleaning unit 340 may be coupled to the mop 350. The mop 350 may be, for example, formed in a disk shape. The mop 350 may include a first mop 351 and a second mop 352.

When the mop 350 is placed on the floor surface, the load of the cleaning module 300 causes the mop 350 to come into close contact with the floor surface, so that the frictional force between the mop 350 and the floor surface increases.

The module housing 310 may form an exterior of the cleaning module 300 and may have the suction port 313a for sucking air. The suction port 313a may be, for example, formed in the front of the bottom surface of the module housing 310. The suction port 313a may be formed to extend from the module housing 310 in the left and right direction.

The module housing 310 may include a lower housing 311 and an upper housing 312 coupled to a top of the lower housing 311.

The rotating cleaning unit 340 may be mounted on the lower housing 311 and the lower housing 311 may form the exterior of the cleaning module 300.

The suction port 313a may be formed in the lower housing 311.

The lower housing 311 may be provided with a substrate mounting portion on which a printed circuit board 390 for controlling the mop drive motor 370 is installed. For example, the substrate mounting portion may be formed in a hook shape extending upward from the lower housing 311.

Although not limited, the substrate mounting portion may be located on one side of the flow path forming part 313 in the lower housing 311. For example, the printed circuit board 390 may be disposed at a position adjacent to a first operation unit 391 and a second operation unit 392. Therefore, a switch installed on the printed circuit board 390 can detect the operations of the first operation unit 391 and the second operation unit 392.

A nozzle hole (not shown) through which a diffuser 337 passes may be formed in the lower housing 311. Water or steam which has passed through a heat generator 336 and the diffuser 337 through the nozzle hole (not shown) may be supplied to the mop 350.

The upper housing 312 may cover the top of the lower housing 311 and may form the exterior of the cleaning module 300 of the present invention.

Also, the module housing 310 may further include the flow path forming part 313 which communicates with the suction port 313a and forms a flow path for guiding air introduced from the suction port 313a to the cleaner body 100.

The flow path forming part 313 may be coupled to an upper central portion of the lower housing 311, and an end of the flow path forming part may be connected to the connecting tube 380.

Therefore, since the suction port 313a can be extended in a substantially straight line in the front and rear direction by the arrangement of the flow path forming part 313, the length of the suction port 313a can be minimized, resulting in flow path loss in the cleaning module 300.

A front portion of the flow path forming part 313 may cover the top of the suction port 313a. The flow path forming part 313 may be disposed to be inclined upward from the front end to the rear side thereof.

Accordingly, the height of the front portion of the flow path forming part 313 may be less than that of the rear portion.

According to this embodiment, since the height of the front portion of the flow path forming part 313 is low, there is an advantage that the height of the front portion of the overall height of the cleaning module 300 can be reduced. The lower the height of the cleaning module 300 is, the higher the possibility that the cleaning module can be pushed into a narrow space under furniture or a chair and performing cleaning.

A blocker 314 is disposed on the bottom surface of the lower housing 311. The blocker 314 shields a front space where the suction port 313a is disposed and a rear space where the mop 350 is disposed, thereby blocking moisture released from the mop 350 from diffusing into the suction port 313a. For example, the blocker 314 may include a central portion 314a and an extension portion 314b. Here, a pair of the extension portions 314b may be symmetrically connected to both end portions of the central portion 314a. Also, the central portion 314a is disposed behind the suction port 313a to block the flow of moisture toward the suction port 313a. Also, the extension portion 314b may be provided in the form of an arc so as to surround the circular mop 350.

A plurality of rollers for smooth movement of the cleaning module 300 may be provided below the lower housing 311.

For example, a front roller 315 may be positioned in front of the mop 350 in the lower housing 311. The front roller 315 may include a first roller 315a and a second roller 315b. The first roller 315a and the second roller 315b may be spaced apart from each other in the left and right direction.

Each of the first roller 315a and the second roller 315b may be rotatably connected to a shaft. The shaft may be disposed to extend in the left and right direction and may be fixed to the bottom of the lower housing 311.

A distance between the shaft and the front portion of the lower housing 311 is greater than a minimum distance between the mop 350 and the front portion of the lower housing 311.

For example, at least a portion of the rotating cleaning unit 340 may be positioned between the shaft of the first roller 315a and the shaft of the second roller 315b.

According to this arrangement, the rotating cleaning unit 340 can be positioned as close as possible to the suction port 313a, and an area cleaned by the rotating cleaning unit 340 in the floor surface on which the cleaning module 300 is positioned increases, thereby improving floor cleaning performance.

In this embodiment, since the first roller 315a and the second roller 315b are coupled to the bottom of the lower housing 311, the mobility of the cleaning module 300 can be improved.

A third roller 316 may be further provided below the lower housing 311. Accordingly, the first roller 315a and the second roller 315b together with the third roller 316 can support the cleaning module 300 at three points. Here, the third roller 316 may be positioned behind the mop 350 so as not to interfere with the mop 350.

A cooling air inlet 317 and a cooling air outlet 318 may be formed in the module housing 310.

The cooling air inlet 317 may be formed in the lower housing 311. External air may be introduced into the module housing 310 through the cooling air inlet 317. In addition, the cooling air inlet 317 may be formed in a front side wall of the lower housing 311. With this configuration, when the cleaning module 300 moves forward by the operation of the user, the inflow amount of air may be increased.

The cooling air outlet 318 may be formed in the upper housing 312. Air within the module housing 310 may be discharged to the outside through the cooling air outlet 318. In addition, the cooling air outlet 318 may be formed on both side walls of the upper housing 312. With this configuration, there are advantages that the air introduced through the cooling air inlet 317 can be induced to pass through the mop drive motor 370 in the process of flowing into the cooling air outlet 318, and overheating of the mop drive motor 370 can be prevented.

Also, based on a state in which the lower housing 311 is placed on the floor surface, the cooling air outlet 318 may be disposed farther from the ground than the cooling air inlet 317. With this configuration, air heated within the module housing 310 rises and can be effectively discharged through the cooling air outlet 318.

The cleaning module 300 may further include a water tank 320 to supply moisture to the mop 350.

The water tank 320 may be detachably connected to the module housing 310. Specifically, the water tank 320 is mounted on a water tank seating portion formed in the upper housing 312.

Also, the water tank 320 may be disposed above the heat generator 336. Specifically, the water tank 320 is disposed above the heat generator 336 in such a way as to be spaced apart from the heat generator 336. That is, the water tank 320 may be disposed above the heat generator 336 with the upper housing 312 placed therebetween.

In a state where the water tank 320 is mounted on the module housing 310, the water tank 320 may form the exterior of the cleaning module 300.

The entire upper side wall of the water tank 320 may substantially form the upper side external appearance of the cleaning module 300. Therefore, the user can visually check whether the water tank 320 is mounted on the module housing 310 or not.

The module housing 310 may further include a water tank release button that is operated in order to release the water tank 320 while the water tank 320 is mounted on the module housing 310. For example, the water tank release button may be located in the central portion of the cleaning module 300. Therefore, there is an advantage that the user can easily recognize the water tank release button and operate the water tank release button.

In the state where the water tank 320 is mounted on the module housing 310, water in the water tank 320 can be supplied to the mop 350.

Specifically, a space capable of storing water is formed within the water tank 320. The water stored in the water tank 320 may be supplied to the heat generator 336 through at least one tube (hose). The water introduced into the heat generator 336 can be heated, and can be phase-changed into steam according to a user's selection. The water heated by the heat generator 336 may be supplied to the mop 350 through the diffuser 337.

The water tank 320 includes a water supply port. The water supply port is a hole through which water flows into the water tank 320. For example, the water supply port may be formed in the side of the water tank 320.

The water tank 320 includes a drain port. The drain port is a hole through which the water stored in the water tank 320 is discharged. The water discharged from the drain port may flow to the heat generator 336. The drain port may be formed in a bottom surface of the water tank 320.

The water tank 320 includes an air hole. Through the air hole, air can be introduced into the water tank 320. When the water stored within the water tank 320 is discharged to the outside, the pressure within the water tank 320 decreases, and air may be introduced into the water tank 320 through the air hole in order to compensate for the decreased pressure. For example, the air hole may be formed in the top of the water tank 320.

The cleaning module 300 according to the embodiment of the present disclosure may further include a water supply unit 330 having a flow path for supplying the water introduced from the water tank 320 to the mop 350.

Specifically, the water supply unit 330 may include a water tank connection portion 331 for introducing the water in the water tank 320 into the module housing 310, a water inlet tube 332 for supplying the water introduced into the water tank connection portion 331 to a water pump 333, a guide tube 334 for supplying the water of the water pump 333 to a T-shaped connector, and a water supply tube 335 for supplying the water introduced into the connector to the heat generator 336.

The water tank connection portion 331 may operate a valve (not shown) within the water tank 320 and allow water to flow.

The water tank connection portion 331 may be coupled to the bottom of the upper housing 312, and a portion of the water tank connection portion may protrude upward through the upper housing 312.

When the water tank 320 is seated in the upper housing 312, the water tank connection portion 331 protruding upward may pass through an outlet of the water tank 320 and may be pushed into the water tank 320.

A sealer for preventing the water discharged from the water tank 320 from leaking around the water tank connection portion 331 may be provided in the upper housing 312. The sealer may be formed of, for example, a rubber material, and may be coupled to the top of the upper housing 312.

The water pump 333 for controlling the discharge of water from the water tank 320 may be installed in the upper housing 312.

The water pump 333 may provide a flow force of water. The water pump 333 may include a first connection port to which the water inlet tube 332 is connected and a second connection port to which the guide tube 334 is connected. Here, the first connection port may be an inlet and the second connection port may be an outlet with respect to the water pump 333.

The water pump 333 operates such that an internal valve body expands or contracts while operating and thus the first connection port and the second connection port communicate with each other. Since the water pump 333 can be implemented by a known structure, a detailed description thereof will be omitted.

The water supply tube 335 may connect the connector and a water inlet 336b of the heat generator 336. For example, the water supply tube 335 may be a pair of tubes branched off at the connector.

Accordingly, water supplied to the water inlet tube 332 is introduced into the water pump 333, and then flows into the guide tube 334. The water flowing into the guide tube 334 flows into the water supply tube 335 by the connector. Also, the water flowing into the water supply tube 335 is supplied to the heat generator 336.

The heat generator 336 heats water. The heat generator 336 is disposed within the module housing 310. Specifically, the heat generator 336 is installed on the top surface of the lower housing 311.

The heat generator 336 includes a heating chamber 336a, the water inlet 336b and a water outlet 336c.

A flow path through which the water introduced from the water tank 320 can flow is formed within the heating chamber 336a. The heating chamber 336a can heat water by receiving electric power from the battery 190 and/or an auxiliary battery 500. The heating chamber 336a may adjust the water temperature according to a user's control. Also, the heating chamber 336a may change the phase of water into steam according to a user's control.

The water inlet 336b may be a hole formed at an inlet of the heating chamber 336a. The water stored in the water tank 320 may flow into the heat generator 336 through the water inlet 336b.

The water outlet 336c may be a hole formed at an outlet of the heating chamber 336a. Water or steam may be discharged from the heat generator 336 through the water outlet 336c. The water outlet 336c may be connected to the diffuser 337.

Meanwhile, in the embodiment of the present disclosure, the heat generator 336 is disposed to be inclined. Specifically, the heating chamber 336a is disposed to be inclined at a predetermined angle with respect to the ground (floor surface).

For example, the rear end of the heating chamber 336a is disposed above the front end of the heating chamber 336a. That is, the heat generator 336 has a backward-upward inclination. Accordingly, water may be heated while flowing from the rear upper portion to the front lower portion of the heat generator 336.

Meanwhile, the water inlet 336b may be disposed at the rear end of the heating chamber 336a, and the water outlet 336c may be disposed at the front end of the heating chamber 336a. That is, based on the state in which the lower housing 311 is placed on the floor surface (ground), the water inlet 336b may be disposed farther from the floor surface (ground) than the water outlet 336c. Accordingly, the water is heated while flowing from the top to the bottom due to gravity, and even if the water is phase-changed into steam and rises, the water can be discharged to the water outlet 336c by the flow force of the water.

The diffuser 337 is configured to discharge water in the water tank 320 to the mop 350.

The diffuser 337 may be received in a space formed within the module housing 310. The diffuser 337 may be connected to the heat generator 336 to discharge the water heated by the heat generator 336 to the mop 350.

For example, the diffuser 337 may be mounted on the module housing 310 in the form of a pair and may be arranged in the left and right direction. In addition, a pair of diffusers 337 arranged in the left and right direction may be formed in a symmetrical shape (mirror image).

In this embodiment, the diffuser 337 includes a diffusion passage through which moisture can flow therein, and a nozzle which allows the moisture flowing through the diffusion passage to be discharged to the mop.

For example, the diffuser 337 may be formed in the form of a circular arc, and at least one nozzle may be provided along the circumferential direction of the diffuser. With this configuration, the diffuser 337 can stably supply moisture to the disk-shaped mop 350.

The water sprayed from the diffuser 337 is supplied to the mop 350. For example, a distance from the center of rotation of the rotating cleaning unit 340 to the diffuser 337 may be greater than a diameter of the rotating cleaning unit 340. Accordingly, the water sprayed from the diffuser 337 may be directly supplied to the mop 350. The mop 350 is rotated while absorbing the water supplied through the diffuser 337 and wipes the floor.

The rotating cleaning unit 340 may rotate by receiving power from the mop drive motor 370. For example, the rotating cleaning unit 340 may be a rotating plate. The rotating cleaning unit 340 may be formed in a disk shape, and the mop 350 may be attached to the bottom surface of the rotating cleaning unit.

The rotating cleaning unit 340 may be, for example, positioned behind the suction port 313a below the module housing 310.

Therefore, when cleaning is performed by moving the cleaning module 300 forward, the foreign substances and air on the floor surface are sucked by the suction port 313a, and then the floor surface can be wiped by the mop 350.

For example, the rotating cleaning unit 340 may include the first rotating cleaning unit 341 which is connected to a first mop drive motor 371 and to which the first mop 351 is attached, and the second rotating cleaning unit 342 which is connected to a second mop drive motor 372 and to which the second mop 352 is attached.

Specifically, the rotating cleaning unit 340 may include an outer body in the form of a circular ring, an inner body which is located in a central region of the outer body and is spaced apart from an inner circumferential surface of the outer body, and a plurality of connecting ribs which connects an outer circumferential surface of the inner body and the inner circumferential surface of the outer body.

On the other hand, the rotating cleaning unit 340 may include an attachment means for attaching the mop 350. For example, the attachment means may be Velcro.

The rotating cleaning unit 340 may be disposed below the lower housing 311. That is, the rotating cleaning unit 340 may be disposed outside the module housing 310.

In addition, the rotating cleaning unit 340 may be connected to the mop drive motor 370 receive power. For example, the rotating cleaning unit 340 may be connected to the mop drive motor 370 through at least one gear, and may be rotated by the operation of the mop drive motor 370.

The rotating cleaning unit 340 may include the first rotating cleaning unit 341 and the second rotating cleaning unit 342.

In this embodiment, the center of rotation of the first rotating cleaning unit 341 and the center of rotation of the second rotating cleaning unit 342 are spaced apart from each other in the left and right direction.

The center of rotation of the rotating cleaning unit 340 may be located farther from the front end of the module housing 310 than the central axis bisecting the front-rear length of the module housing 310. This intends to prevent the rotating cleaning unit 340 from blocking the suction port 313a.

A distance between the center of rotation of the first rotating cleaning unit 341 and the center of rotation of the second rotating cleaning unit 342 may be larger than the diameter of the mop 350. This intends to reduce mutual friction caused by interference between the first mop 351 and the second mop 352 during rotation of the first mop 351 and the second mop 352, and to prevent that an area that can be cleaned is reduced as much as the interference portion.

The mop 350 may wipe the floor surface by its rotation.

The mop 350 may be coupled to the bottom of the rotating cleaning unit 340 in such a way as to face the floor surface.

The mop 350 is intended such that the bottom surface of the mop 350 that faces the floor surface has a predetermined area. The mop 350 has a flat shape. The mop 350 is formed in a form in which the horizontal width (or diameter) thereof is sufficiently greater than the up and down height thereof. When the mop 350 is coupled to the lower housing 311 side, the bottom surface of the mop 350 may be parallel to the floor surface.

The bottom surface of the mop 350 may be generally circular, and the mop 350 may be formed in a rotationally symmetrical shape as a whole. In addition, the mop 350 may be attached to and detached from the bottom surface of the rotating cleaning unit 340, and may be coupled to the rotating cleaning unit 340 to rotate together with the rotating cleaning unit 340.

In a state where the rotating cleaning unit 340 is coupled to the bottom of the module housing 310, a portion of the mop 350 protrudes outward from the cleaning module 300 to clean not only the floor surface positioned below the cleaning module 300 but also the floor surface located outside the cleaning module 300.

For example, the mop 350 may protrude to not only both sides but also the rear of the cleaning module 300.

The mop 350 may include the first mop 351 coupled to the first rotating cleaning unit 341 and the second mop 352 coupled to the second rotating cleaning unit 342. Therefore, when the first rotating cleaning unit 341 is rotated by receiving the power of the first mop drive motor 371, the first mop 351 may also be rotated together, and when the second rotating cleaning unit 342 is rotated by receiving the power of the second mop drive motor 372, the second mop 352 may also be rotated together.

Meanwhile, in this embodiment, the cleaning module 300 may further include a light emitting module 360.

The light emitting module 360 may emit light forward from the cleaning module 300 and thus may identify foreign substances or microorganisms present in front of the cleaning module 300.

The light emitting module 360 may be disposed in the front of the module housing 310. For example, the light emitting module 360 may be disposed on the front of the lower housing 311 and may be disposed in plural numbers along the left and right direction. Here, the light emitting module 360 may be disposed behind the cooling air inlet 317. Through this arrangement, the light emitting module 360 can be cooled by the air introduced from the cooling air inlet 317.

Meanwhile, the light emitting module 360 may include a light emitting member and a diffusion plate.

The light emitting member may emit light forward or downward. For example, the light emitting member may be composed of a plurality of LEDs. Here, the light emitted by the light emitting member may be visible light, or may be infrared (IR) light or ultraviolet (UV) light according to the embodiment. With this configuration, when the light emitting member is operated, it is possible to check the presence of foreign substances or microorganisms in front of the cleaning module 300 and to sterilize the foreign substances or microorganisms present in front of the cleaning module 300, so that hygiene is improved.

In addition, the diffusion plate may be disposed in front of the light emitting member to diffuse the light emitted from the light emitting member.

On the other hand, the cleaning module 300 may further include the mop drive motor 370 that provides power for rotating the mop 350 and the rotating cleaning unit 340.

Specifically, the mop drive motor 370 includes the first mop drive motor 371 for rotating the first rotating cleaning unit 341 and the second mop drive motor 372 for rotating the second rotating cleaning unit 342.

In this way, since the first mop drive motor 371 and the second mop drive motor 372 operate individually, even if any one of the first mop drive motor 371 and the second mop drive motor 372 fails, there is an advantage that the rotation of the rotating cleaning unit 340 is possible by the other.

On the other hand, in the module housing 310, the first mop drive motor 371 and the second mop drive motor 372 may be spaced apart from each other in the left and right direction. Also, the first mop drive motor 371 and the second mop drive motor 372 may be located behind the suction port 313a.

The mop drive motor 370 may be disposed within the module housing 310. For example, the mop drive motor 370 may be seated on the upper portion of the lower housing 311 and be covered by the upper housing 312. That is, the mop drive motor 370 may be positioned between the lower housing 311 and the upper housing 312.

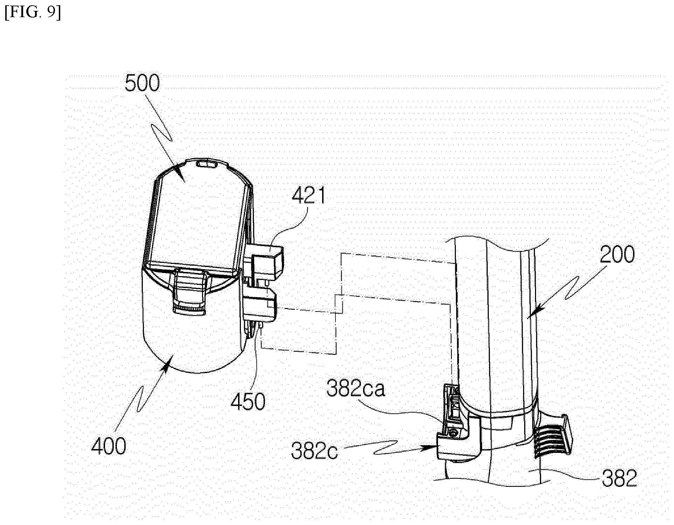

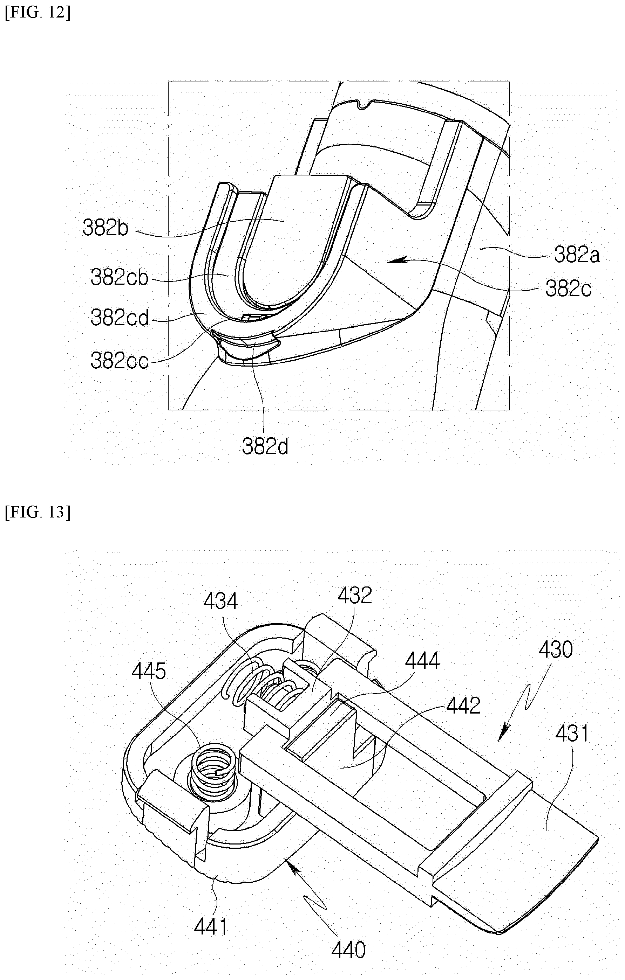

Meanwhile, FIG. 9 is a view for describing a direction in which an auxiliary battery housing and the cleaning module are coupled in the cleaner according to the embodiment of the present disclosure. FIG. 12 is a partial perspective view for describing the connecting tube in the cleaner according to the embodiment of the present disclosure.

The connecting tube 380 will be described with reference to FIGS. 1 to 9 and 12 as follows.

The cleaning module 300 includes the connecting tube 380 coupled to the cleaner body 100 or the extension tube 200.

The connecting tube 380 includes a first connecting tube 381 connected to the end of the flow path forming part 313, a second connecting tube 382 rotatably connected to the first connecting tube 381, and a guide tube communicating the inside of the first connecting tube 381 and the inside of the second connecting tube 382.

The first connecting tube 381 is formed in a tubular shape. One side end of the first connecting tube in the axial direction is connected to the end of the flow path forming part 313, and the other side end in the axial direction is rotatably coupled to the second connecting tube 382. Here, a portion of the outer circumferential surface of the first connecting tube 381 may be cut and opened, and the cut-opened portion may be disposed upward and toward the second connecting tube 382. With this configuration, in a state where the cleaning module 300 is placed on the ground, an angle formed between the second connecting tube 382 and the ground may be changed according to the user's arm movement. That is, the first connecting tube 381 and the second connecting tube 382 can serve as a type of joint capable of adjusting an angle between the cleaning module 300 and the cleaner body 100.

Meanwhile, in this embodiment, the second connecting tube 382 may be coupled to an auxiliary battery housing 400.

The second connecting tube 382 includes a connecting tube body 382a, a battery support portion 382b, a battery connecting portion 382c, and a hook receiving groove 382d.

The connecting tube body 382a is formed in a tubular shape. One side end of the connecting tube body in the axial direction is rotatably coupled to the first connecting tube 381. The cleaner body 100 or the extension tube 200 is inserted into, and is coupled to the other side end of the connecting tube body in the axial direction in an attachable and detachable manner.

The battery support portion 382b and the battery connecting portion 382c may protrude outward from the front of the connecting tube body 382a. In a state in which the auxiliary battery housing 400 is coupled, the battery support portion 382b and the battery connecting portion 382c may come into contact with the auxiliary battery housing 400 and support each other.

The battery connecting portion 382c may protrude outward from the front of the connecting tube body 382a and may be coupled to a coupling portion 420 of the auxiliary battery housing 400. Here, a corresponding terminal 382ca is formed on the top surface of the battery connecting portion 382c, and a coupling groove 382cb is formed in the front of the battery connecting portion 382c. A side wall 382cd is formed to protrude from the outside of the coupling groove 382cb, and a communication terminal 382cc may be disposed within the coupling groove 382cb.

The corresponding terminal 382ca is formed to receive a coupling terminal 450 of the auxiliary battery housing 400. For example, the corresponding terminal 382ca may be formed on the top surface of the battery connecting portion 382c in the shape of a pair of circular grooves.

With this configuration, while the auxiliary battery housing 400 moves downward in the longitudinal direction of the second connecting tube 382, the coupling terminal 450 may be inserted and coupled to the corresponding terminal 382ca (see FIG. 9).

The coupling groove 382cb is formed to receive a second coupling portion 422 therein. For example, the coupling groove 382cb may be disposed in the front of the battery connecting portion 382c and may be formed in a form in which an upper portion thereof is open and a lower portion thereof is surrounded by the "U"-shaped side wall 382cd.

With this configuration, the coupling direction of the auxiliary battery housing 400 can be guided such that the auxiliary battery housing moves downward in the longitudinal direction of the second connecting tube 382.

In addition, a left-right width of the coupling groove 382cb may be equal to or greater than the maximum left-right width of the second coupling portion 422. Accordingly, when the auxiliary battery housing 400 is coupled, the second coupling portion 422 can be received within the coupling groove 382cb and stably supported.

Meanwhile, when the auxiliary battery housing 400 is coupled to the battery connecting portion 382c, a communication terminal 423 of the auxiliary battery housing 400 and the communication terminal 382cc of the battery connecting portion 382c may contact each other.

With this configuration, the auxiliary battery housing 400 may be connected to the cleaning module 300 signally.

The battery support portion 382b may be at least partially disposed within the battery connecting portion 382c and be coupled to a first coupling portion 421. The battery support portion 382b may be formed to protrude upward from the battery connecting portion 382c. Here, a left-right width of the battery support portion 382b may be greater than or equal to a distance between a pair of the first coupling portions 421.

With this configuration, when the auxiliary battery housing 400 is coupled, the battery support portion 382b can be inserted and fixed between the pair of first coupling portions 421, and the auxiliary battery housing 400 can be supported and prevented from shaking in the left and right direction.

The hook receiving groove 382d may be formed in the battery connecting portion 382c and may receive a stopper 430 in a state where the auxiliary battery housing 400 is coupled to the cleaning module 300.

Specifically, the hook receiving groove 382d may be formed on an outer circumferential surface of the side wall 382cd of the battery connecting portion 382c. In the state in which the auxiliary battery housing 400 is coupled, a hook portion 431 of the stopper 430 may be received in the hook receiving groove 382d.

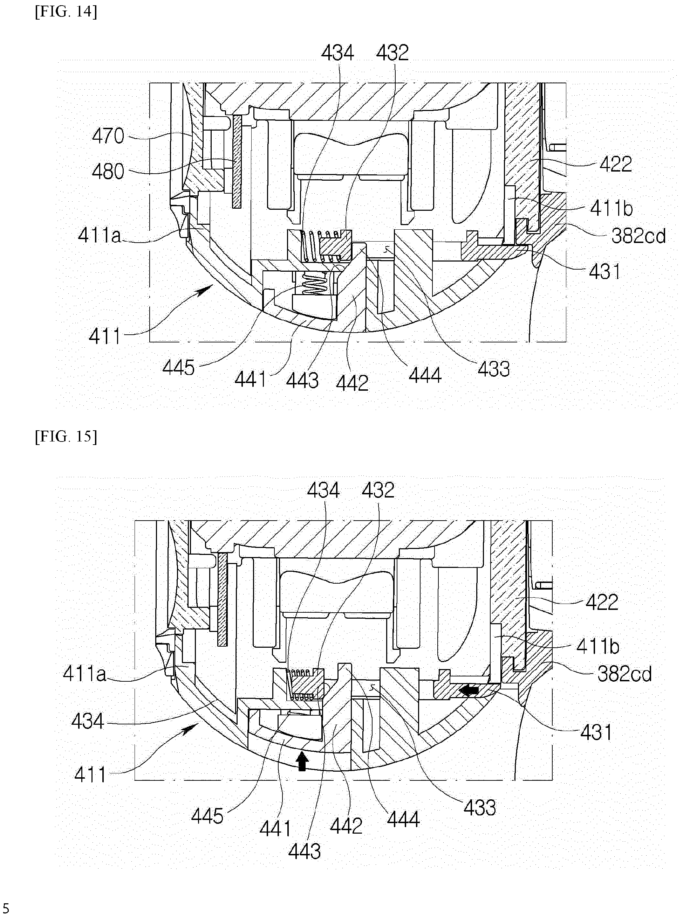

Accordingly, as shown in FIG. 14, in the state in which the auxiliary battery housing 400 is coupled, an inner circumferential surface of the side wall 382cd comes into contact with the second coupling portion 422, and an outer circumferential surface of the side wall 382cd comes into contact with the hook portion 431.

With this configuration, the hook portion 431 is received in the hook receiving groove 382d to prevent the auxiliary battery housing 400 from being separated from the cleaning module 300 during the cleaning process.

Meanwhile, wires may be embedded in the first connecting tube 381 and the second connecting tube 382, and the wires embedded in the first connecting tube 381 and the second connecting tube 382 may be electrically connected to each other. With this configuration, current applied by the battery 190 or the auxiliary battery 500 of the cleaner body 100 may be transmitted to the cleaning module 300.

Meanwhile, the guide tube may connect an inner space of the first connecting tube 381 and an inner space of the second connecting tube 382. A flow path may be formed within the guide tube such that the air sucked from the cleaning module 300 flows to the extension tube 200 and/or the cleaner body 100. Here, the guide tube may be deformed together by the rotation of the first connecting tube 381 and the second connecting tube 382. For example, the guide tube may be formed in a corrugated tube shape.

Meanwhile, the cleaning module 300 may include the printed circuit board 390 on which a module controller (not shown) for controlling the cleaning module 300 is disposed. A current may be applied to the printed circuit board 390 and communication lines may be disposed on the printed circuit board. Here, the printed circuit board 390 may be cooled by air which is introduced into the cooling air inlet 317 and is discharged through the cooling air outlet 318.

Meanwhile, the module housing 310 may further include the first operation unit 391 for adjusting the amount of water discharged from the water tank 320. For example, the first operation unit 391 may be located at the rear of the module housing 310.

The first operation unit 391 can be operated by the user. By operating the first operation unit 391, water may be discharged or may not be discharged from the water tank 320.

Alternatively, the amount of water discharged from the water tank 320 can be adjusted by the first operation unit 391. For example, as the user operates the first operation unit 391, the water tank 320 may discharge a first amount of water per unit time, or may discharge a second amount of water per unit time that is greater than the first amount.

The first operation unit 391 may be provided to pivot on the module housing 310 in the left and right direction, or may be provided to pivot in the up and down directions according to the embodiment.

For example, when the first operation unit 391 is located in the neutral position, the amount of the discharged water is 0, and when the left side of the first operation unit 391 is pushed and the first operation unit 391 is pivoted to the left, the water tank 320 may discharge the first amount of water per unit time. In addition, when the right side of the first operation unit 391 is pushed and the first operation unit 391 is pivoted to the right, the water tank 320 may discharge the second amount of water per unit time.

Meanwhile, the module housing 310 may further include the second operation unit 392 for adjusting the phase of moisture discharged from the heat generator 336. For example, the second operation unit 392 may be located at the rear of the module housing 310.

The second operation unit 392 can be operated by the user. By operating the second operation unit 392, water may be discharged from the heat generator 336 to the mop 350 or steam may be discharged from the heat generator 336 to the mop 350.

The second operation unit 392 may be rotatably provided to the module housing 310. For example, the second operation unit 392 may be a rotary handle (dial).

For example, in a state in which the second operation unit 392 is rotated to point to a first position, water at room temperature may be discharged to the mop 350 without being heated by the heat generator 336. In addition, in a state in which the second operation unit 392 is rotated to point to a second position different from the first position, the water may be heated by the heat generator 336 and may be discharged to the mop 350. In addition, in a state in which the second operation unit 392 is rotated to point to a third position different from the first position and the second position, the water may be heated by the heat generator 336 and may be phase-changed to steam, and then may be discharged to the mop 350.

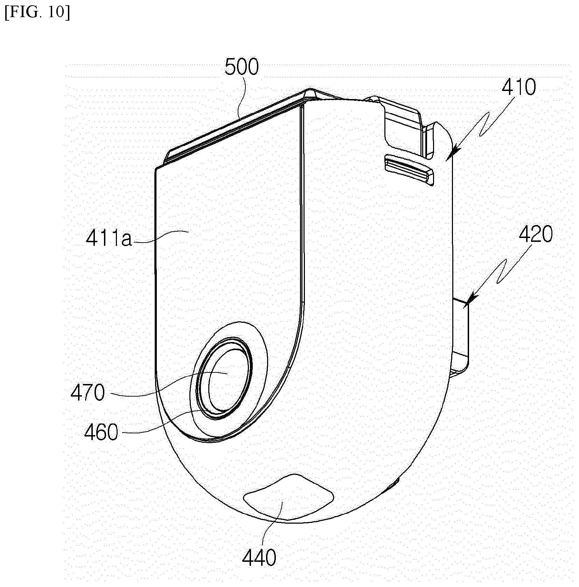

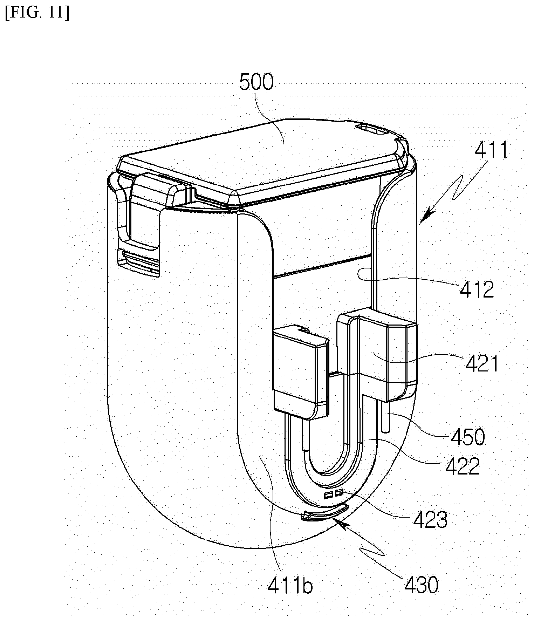

Meanwhile, FIG. 10 is a perspective view for describing the auxiliary battery housing in the cleaner according to the embodiment of the present disclosure. FIG. 11 is a perspective view of FIG. 10 viewed from another direction. FIG. 12 is a partial perspective view for describing the connecting tube in the cleaner according to the embodiment of the present disclosure. FIG. 13 is a perspective view for describing the stopper and a release button of the auxiliary battery housing in the cleaner according to the embodiment of the present disclosure. FIG. 14 is a perspective view for describing a state where the auxiliary battery housing and the cleaning module are coupled in the cleaner according to the embodiment of the present disclosure. FIG. 15 is a perspective view for describing a state where the fixation of the auxiliary battery housing and the cleaning module is released by applying an external force to the release button in the cleaner according to the embodiment of the present disclosure.

Referring to FIGS. 1 to 15, the auxiliary battery housing 400 according to the embodiment of the present disclosure will be described as follows.

The auxiliary battery housing 400 may be detachably coupled to the cleaning module 300, and the auxiliary battery 500 may be detachably coupled to the auxiliary battery housing. Specifically, the auxiliary battery housing 400 may be coupled to the connecting tube 380 of the cleaning module 300 and may detachably receive the auxiliary battery 500 therein. In the state where the auxiliary battery housing 400 is coupled to the cleaning module 300, the auxiliary battery housing 400 may be disposed between the extension tube 200 and the cleaning module 300.

Therefore, according to the embodiment of the present disclosure, the load of the auxiliary battery 500 may be transferred to the cleaning module 300 through the connecting tube 380, and may be distributed over the entire cleaning module 300 along the connecting tube 380 and the module housing 310. Therefore, the user can comfortably operate the cleaning module.

Meanwhile, for convenience of understanding, a direction of the auxiliary battery housing 400 is defined as follows. In this embodiment, the direction can be described based on a state in which the auxiliary battery housing 400 is coupled to the connecting tube 380 and the extension tube 200 is disposed in a direction perpendicular to the ground.

Accordingly, a lower portion of the auxiliary battery housing 400 may mean a direction toward the first connecting tube 381. Also, an upper portion of the auxiliary battery housing 400 may mean a direction toward the cleaner body 100. Also, a front of the auxiliary battery housing 400 may mean a direction away from the second connecting tube 382. Also, a rear of the auxiliary battery housing 400 may be in a direction facing the second connecting tube 382.

Meanwhile, in the embodiment of the present embodiment, an auxiliary battery receiver 410 may be disposed farther from the floor surface than the coupling portion 420.

That is, in the state where the auxiliary battery 500 is coupled to the auxiliary battery housing 400 and the auxiliary battery housing 400 is coupled to the cleaning module 300, when the cleaner body 100 is placed on the floor surface, at least a portion of the extension tube 200 may be disposed closer to the floor surface than the auxiliary battery 500.

In addition, in the state where the auxiliary battery 500 is coupled to the auxiliary battery housing 400 and the auxiliary battery housing 400 is coupled to the cleaning module 300, when the cleaning module 300 is placed on the floor surface, at least a portion of the auxiliary battery 500 may be disposed farther from the floor surface than the connecting tube 380. For example, the upper end of the auxiliary battery 500 may be disposed farther from the floor surface than the upper end of the connecting tube 380.

Also, in a state where the extension tube 200 and the cleaning module 300 are coupled, the auxiliary battery 500 may be disposed farther from the floor than a contact portion between the extension tube 200 and the cleaning module 300.

With this configuration, when the user stands the extension tube 200 close to vertical with respect to the cleaning module 300, there is an effect that self-standing is possible in which the extension tube 200 and the cleaner body 100 stand vertically with respect to the ground and maintain.

Meanwhile, the auxiliary battery housing 400 may be disposed at a predetermined distance from the module housing 310 of the cleaning module 300. For example, in a state where the second connecting tube 382 is positioned in a direction perpendicular to the ground, the lowest portion of the auxiliary battery housing 400 may be disposed above the highest portion of the upper housing 312.

Therefore, according to the embodiment of the present disclosure, there is an effect of preventing the auxiliary battery housing 400 from being interfered with the cleaning module 300 during the cleaning process.

The auxiliary battery housing 400 includes the auxiliary battery receiver 410, a coupling portion 420, the stopper 430, a release button 440, the terminal 450, a battery display unit 460, and an input button 470.

The auxiliary battery housing 400 may include the auxiliary battery receiver 410 in which an auxiliary battery receiving groove 412 into which the auxiliary battery 500 is inserted is formed.

The auxiliary battery 500 may be detachably coupled to the auxiliary battery receiver 410. The auxiliary battery 500 may be detachably received within the auxiliary battery receiver 410.

Specifically, the auxiliary battery receiver 410 may include a receiver body 411 and the auxiliary battery receiving groove 412.

The receiver body 411 forms the exterior of the auxiliary battery housing 400, and the auxiliary battery 500 can be received within the receiver body 411.

For example, the receiver body 411 may have a pair of sides facing each other and a curved surface connecting the pair of sides. That is, in the state where the auxiliary battery housing 400 is coupled to the cleaning module 300, a front side 411a of the receiver body 411 may be disposed in a direction away from the connecting tube 380, and a rear side 411b of the receiver body 411 may be disposed at a position facing the connecting tube 380. The front side 411a and the rear side 411b are arranged side by side with each other, and the left-right ends and lower ends of the front side 411a and the rear side 411b are connected to each other.

Accordingly, one side end of the receiver body 411 in the axial direction may be formed with an open interior such that the auxiliary battery 500 can be received, and the left-right width of the other side end of the receiver body 411 in the axial direction may become gradually narrower. With this configuration, the receiver body 411 receives the auxiliary battery 500 therein, and the overall volume and weight can be minimized.

The auxiliary battery 500 can be received in the auxiliary battery receiving groove 412. The auxiliary battery receiving groove 412 may be formed in a shape corresponding to the shape of an auxiliary battery body 510 such that the auxiliary battery body 510 can be fitted thereinto. For example, a front-rear diameter of the auxiliary battery receiving groove 412 may be equal to or greater than a front-rear diameter of the battery body 510. In addition, a left-right diameter of the auxiliary battery receiving groove 412 may be equal to or greater than a left-right diameter of the battery body 510. Also, a curvature of the side wall of the auxiliary battery receiving groove 412 may be equal to that of the outer surface of the battery body 510 facing the auxiliary battery receiving groove 412.

Meanwhile, the auxiliary battery receiving groove 412 may be formed to have a side wall having an inclined surface at a predetermined angle in the state in which the auxiliary battery housing 400 is coupled to the connecting tube 380. Here, an entrance of the auxiliary battery receiving groove 412 into which the auxiliary battery 500 is inserted may be opened inclined upward at a predetermined angle with respect to the ground.

Accordingly, the auxiliary battery 500 may be inserted and coupled to the auxiliary battery housing 400 in such a way as to be inclined downward. Specifically, a direction in which the auxiliary battery receiving groove 412 is formed may form an angle of 0 degree or more and less than 90 degrees with the axial direction of the extension tube 200. For example, an imaginary extension line penetrating the inside of the auxiliary battery receiving groove 412 may be parallel to an imaginary extension line penetrating the internal flow path of the extension tube 200 or may cross each other at an angle of less than 90 degrees. That is, a direction in which the auxiliary battery 500 is inserted may form an angle of 0 degree or more and less than 90 degrees with the longitudinal direction of the extension tube 200.

The auxiliary battery receiver 410 may include a connection terminal. Although not shown, the connection terminal may be provided within the receiver body 411.

The connection terminal (not shown) may be provided on a lower end of the auxiliary battery receiving groove 412. That is, the connection terminal may be disposed farthest from the entrance into which the auxiliary battery 500 is inserted, in the auxiliary battery receiving groove 412. With this configuration, when the auxiliary battery 500 is coupled to the auxiliary battery receiving groove 412, a terminal provided in an electrical connection portion 540 of the auxiliary battery 500 may come into contact with the connection terminal.

The auxiliary battery receiver 410 may further include a catching protrusion 414 and a fastening hole (not shown). Here, the catching protrusion 414 and the fastening hole may be formed on both sides of the receiver body 411.

The catching protrusion 414 may be hook-coupled to the auxiliary battery 500. The catching protrusion 414 may be formed on one left-right side surface of the receiver body 411. A first coupling button 520 of the auxiliary battery 500 may be coupled to the catching protrusion 414. Here, a first button 521 may be caught and supported by the catching protrusion 414, and a first hook 522 may be hook-coupled to the catching protrusion 414.

The fastening hole (not shown) may be hook-coupled to the auxiliary battery 500. The fastening hole may be formed on the other left-right side surface of the receiver body 411. A second coupling button 530 of the auxiliary battery 500 may be coupled to the fastening hole. Here, a second hook 532 may be hook-coupled to the fastening hole.

Accordingly, when the auxiliary battery 500 is inserted into the auxiliary battery receiving groove 412, the catching protrusion 414 and the fastening hole are hook-coupled to the auxiliary battery 500, thereby preventing the auxiliary battery 500 from being separated.

The coupling portion 420 may protrude from the auxiliary battery receiver 410 and may be coupled to the cleaning module 300.

Specifically, the coupling portion 420 includes the first coupling portion 421 and the second coupling portion 422. Here, the first coupling portion 421 and the second coupling portion 422 may be formed on the rear side 411b of the auxiliary battery receiver 410. That is, based on the state where the auxiliary battery housing 400 is coupled to the cleaning module 300, the first coupling portion 421 and the second coupling portion 422 may protrude from the receiver body 411 toward the connecting tube 380.

The first coupling portion 421 may include the coupling terminal 450 which protrudes from the auxiliary battery receiver 410 and is electrically connected to the cleaning module 300.

In addition, the second coupling portion 422 may protrude from the auxiliary battery receiver 410 and may be connected to the first coupling portion 421.

Here, based on the state where the auxiliary battery housing 400 is coupled to the cleaning module 300, the first coupling portion 421 may be disposed farther from the ground than the second coupling portion 422. In other words, the first coupling portion 421 may be disposed farther from the first connecting tube 381 of the connecting tube 380 than the second coupling portion 422.

For example, the first coupling portion 421 may be formed in the form of a pair protruding parallel to each other along the longitudinal direction. In addition, the second coupling portion 422 may be formed to protrude in the form of a "U" shape, and a pair of upper ends may be connected to the first coupling portion 421, respectively.

Meanwhile, a protrusion height of the first coupling portion 421 from the auxiliary battery receiver 410 may be greater than a protrusion height of the second coupling portion 422 from the auxiliary battery receiver 410.

With this configuration, the first coupling portion 421 and the second coupling portion 422 may be supported in contact with the battery connecting portion 382c of the second connecting tube 382. Specifically, when the user lifts the cleaner body 100, the bottom surface of the first coupling portion 421 may be supported in contact with the top surface of the battery connecting portion 382c.

Also, the second coupling portion 422 may be received in a groove formed in the battery connecting portion 382c. That is, the second coupling portion 422 formed in the form of a "U" shape may move along the coupling groove 382cb formed in the battery connecting portion 382c and may be received within the coupling groove 382cb.

With this configuration, a direction in which the coupling portion 420 is coupled to the second connecting tube 382 can be guided. In addition, in a state in which the coupling portion 420 and the second connecting tube 382 are coupled, the second coupling portion 422 may be supported in contact with a side wall protruding from the outside of the coupling groove 382cb.

Therefore, when the user lifts and uses the cleaner body 100, the auxiliary battery housing 400 may be supported by being hung by the battery connecting portion 382c.

Therefore, according to the embodiment of the present disclosure, the auxiliary battery housing 400 may be coupled or separated in the longitudinal direction of the second connecting tube 382 of the cleaning module 300 (or in the longitudinal direction of the extension tube 200).

Meanwhile, the coupling portion 420 may further include the communication terminal 423. The communication terminal 423 may be disposed in the second coupling portion 422. The communication terminal 423 may be electrically connected to the cleaning module 300 and/or the cleaner body 100. Through the communication terminal 423, the printed circuit board provided in the auxiliary battery housing 400 and the printed circuit board provided in the cleaning module 300 and/or the cleaner body 100 may transmit and receive electrical signals.

With this configuration, the auxiliary battery housing 400 may communicate with the cleaning module 300 and/or the cleaner body 100.

The stopper 430 may be provided in the auxiliary battery receiver 410 in such a manner as to be able to perform a linear reciprocating motion. The stopper 430 includes the hook portion 431, a moving portion 432 and a penetrating portion 433. The stopper 430 may be formed in the longitudinal direction and may be disposed within the auxiliary battery receiver 410. At least a portion of the stopper 430 may be exposed to the outside of the auxiliary battery receiver 410. For example, the stopper 430 is formed in the form of a bar. Here, the hook portion 431 is disposed on one longitudinal side of the stopper 430, and the moving portion 432 is disposed on the other longitudinal side of the stopper 430. The penetrating portion 433 is disposed between the hook portion 431 and the moving portion 432. Also, the moving portion 432 may come into contact with a return spring 434.

In a state where the auxiliary battery housing 400 and the cleaning module 300 are coupled, the hook portion 431 may come into contact with the cleaning module 300. The hook portion 431 may be provided in the auxiliary battery housing 400 in such a manner as to be able to perform a linear reciprocating motion. At least a portion of the hook portion 431 may come into the auxiliary battery housing 400 or may be exposed to the outside of the auxiliary battery housing 400 according to the linear reciprocating motion. Here, the hook portion 431 may be exposed on one side (i.e., the rear side 411b) of the auxiliary battery receiver 410 from which the second coupling portion 422 is formed to protrude. Accordingly, the hook portion 431 may be supported in contact with the connecting tube 380 of the cleaning module 300.

For example, in the state where the auxiliary battery housing 400 and the cleaning module 300 are coupled, a lower portion of the hook portion 431 (direction of the first connector 381) may be formed in a curved shape, and an up and down thickness of the hook portion becomes smaller the farther it gets from the auxiliary battery housing 400. Here, the bottom surface of the outer end of the hook portion 431 (the end in a direction away from the auxiliary battery housing 400) may be formed to rise gradually.

With this configuration, even when the bottom surface of the hook portion 431 comes into contact with the battery connecting portion 382c in the process in which the auxiliary battery housing 400 is coupled to the connecting tube 380, the battery connecting portion 382c can move along the curved surface formed on the lower portion of the hook portion 431, and the hook portion 431 can be prevented from being damaged.

In addition, in the process in which the auxiliary battery housing 400 is coupled to the connecting tube 380, when the hook portion 431 is pressed by the battery connecting portion 382c, the hook portion 431 may be moved toward the inside of the auxiliary battery receiver 410.

In addition, when the auxiliary battery housing 400 is coupled to the connecting tube 380, the hook portion 431 is received in the hook receiving groove 382d formed in the second connecting tube 382, and the top surface of the hook portion 431 may support a protrusion of the battery connecting portion 382c. Accordingly, the stopper 430 can prevent the auxiliary battery receiver 410 from being separated from the second connecting tube 382.

The moving portion 432 may be connected to the hook portion 431 through the penetrating portion 433 and may come into contact with the return spring 434 and the release button 440.

The moving portion 432 is disposed within the auxiliary battery receiver 410 and is able to perform a linear reciprocating motion in the longitudinal direction of the stopper 430.

The moving portion 432 is disposed on the other longitudinal side of the stopper 430. One longitudinal side of the moving portion 432 (a direction toward the hook portion 431) is in contact with the release button 440, and the other longitudinal side of the moving portion 432 may be in contact with the return spring 434.

When the release button 440 moves upward, one side surface of the moving portion 432 may come into contact with an inclined surface 443 of the release button 440 and may move along the inclined surface 443 in a straight line. Specifically, by the upward movement of the inclined surface 443, the moving portion 432 may move in a straight line in a direction in which the return spring 434 is disposed and may compress the return spring 434.

Meanwhile, in a state in which the return spring 434 is compressed, the moving portion 432 may be moved in a straight line by a restoring force of the return spring 434 in a direction in which the hook portion 431 is disposed.

The penetrating portion 433 connects the hook portion 431 and the moving portion 432, and the release button 440 may pass through the penetrating portion 433. For example, the penetrating portion 433 may include a pair of frames connecting the hook portion 431 and the moving portion 432 and a hole formed between the pair of frames.

With this configuration, the frame of the penetrating portion 433 may transmit a force transmitted through the hook portion 431 to the moving portion 432 and may transmit a restoring force applied to the moving portion 432 to the hook portion 431.

In addition, a catching portion 444 of the release button 440 may pass through the hole of the penetrating portion 433. As the release button 440 moves, at least a portion of the inclined surface 443 may pass through the hole of the penetrating portion 433.

With this configuration, the release button 440 and the stopper 430 may be disposed to cross each other within the auxiliary battery receiver 410. Thus, the overall volume of the auxiliary battery 400 can be minimized.

The return spring 434 may be disposed within the auxiliary battery receiver 410 and may apply an elastic force to the stopper 430. For example, the return spring 434 may be a coil spring. One longitudinal end of the return spring 434 may be fixed to the auxiliary battery receiver 410, and the other longitudinal end of the return spring 434 may be coupled to the moving portion 432 of the stopper 430.

With this configuration, when the return spring 434 is compressed by the stopper 430, a restoring force is generated to move at least a portion of the stopper 430 to the outside of the auxiliary battery receiver 410.

Therefore, when the auxiliary battery housing 400 is coupled to the cleaning module 300, the stopper 430 is received in the hook receiving groove 382d by the restoring force of the return spring 434, and the coupling of the stopper 430 and the second connecting tube 382 can be fixed (see FIG. 14).

The release button 440 may be provided in the auxiliary battery receiver 410 in such a manner as to be able to perform a linear reciprocating motion and may come into contact with the stopper 430. The release button 440 may be disposed in a lower portion of the auxiliary battery receiver 410. Specifically, the release button 440 is received within the auxiliary battery receiver 410, and a lower end of the release button 440, together with the auxiliary battery receiver 410, forms the exterior of the auxiliary battery housing 400.

The release button 440 includes a button portion 441, a protruding portion 442, the inclined surface 443, and the catching portion 444.

The button portion 441 is provided to receive an external force. The button portion 441 may form a lower exterior of the auxiliary battery housing 400. That is, the outer surface of the button portion 441 may be exposed to the lower side of the auxiliary battery housing 400 to show the user a position that the user should press.

With this configuration, the button portion 441 may be disposed such that the user's index finger and/or middle finger can press the button portion 441 in a state where the user's palm covers the auxiliary battery receiver 410.

When an external force is applied to the button portion 441, the button portion 441 is able to move in a straight line. For example, the user may move the release button 440 by pressing the button portion 441.

The protruding portion 442 protrudes from the button portion 441 and extends in a direction crossing the longitudinal direction of the stopper 430. For example, the protruding portion 442 may be formed to protrude and extend upward from an inner surface of the button portion 441 (a direction in which the auxiliary battery 500 is disposed). An extending direction of the protruding portion 442 may be parallel to a direction in which the button portion 441 moves in a straight line.

The inclined surface 443 is formed on the protruding portion 442 and forms a predetermined angle with the extending direction of the protruding portion 442. The inclined surface 443 may come into contact with the moving portion 432 of the stopper 430.

With this configuration, when an external force is applied to the button portion 441 and the button portion 441 and the protruding portion 442 are moved, the inclined surface 443 is also moved (upward) and the moving portion 432 of the stopper 430 can be moved.

Therefore, when an external force is applied to the button portion 441 by the user, the moving portion 432 moves in the direction of the return spring 434 along the inclined surface 443, and the return spring 434 is compressed (see FIG. 15).).

Therefore, when an external force is applied to the button portion 441 in the state where the auxiliary battery housing 400 is coupled to the cleaning module 300, the stopper 430 received in the hook receiving groove 382d escapes from the hook receiving groove 382d. Accordingly, the fixation of the auxiliary battery housing 400 and the cleaning module 300 may be released.

The catching portion 444 may protrude and extend from the protruding portion 442 and may be supported in contact with the moving portion 432. The catching portion 444 extends upward from the protruding portion 442. Here, the catching portion 444 may be connected to the inclined surface 443. Therefore, the catching portion 444 may be received in the hole of the penetrating portion 433, and when the inclined surface 443 moves upward while in contact with the moving portion 432 according to the movement of the release button 440, the catching portion 444 may pass through the hole of the penetrating portion 433.

With this configuration, in a state where no external force is applied to the release button 440, the catching portion 444 and the moving portion 432 may be supported through contact with each other. Accordingly, the catching portion 444 may prevent the stopper 430 from being separated outward from the auxiliary battery receiver 410.

A return spring 445 may be disposed within the auxiliary battery receiver 410 and may apply an elastic force to the release button 440. For example, the return spring 445 may be a coil spring. One longitudinal end of the return spring 445 may be fixed to the auxiliary battery receiver 410, and the other longitudinal end of the return spring 445 may be coupled to the button portion 441 of the release button 440. With this configuration, when an external force is applied to the button portion 441 and the button portion 441 is compressed, the return spring 445 generates a restoring force. When the application of the external force is released, the return spring 445 may return the button portion 441 to its original position.

Therefore, according to the embodiment of the present disclosure, the user can release the coupling of the auxiliary battery housing 400 and the cleaning module 300 by pressing the release button 440 in a direction parallel to the longitudinal direction of the second connecting tube 382.

That is, the user not only presses the release button 440 with the user's index finger and/or middle finger but also pulls the entire auxiliary battery housing 400 toward the cleaner body 100, thereby separating the auxiliary battery housing 400 from the cleaning module 300.

Therefore, according to the embodiment of the present disclosure, in the process in which the user separates the auxiliary battery housing 400, the direction in which the release button 440 is pressed coincides with the direction in which the auxiliary battery housing 400 is pulled, so that the user can easily separate the auxiliary battery.

The coupling terminal 450 may be disposed on the coupling portion 420 and may be coupled to the battery connecting portion 382c of the second connecting tube 382. For example, the coupling terminal 450 may be provided in the form of a pair and may be disposed on bottom surfaces of the pair of the first coupling portions 421, respectively. The coupling terminal 450 may be inserted and coupled to a groove-shaped corresponding terminal formed in the connecting portion 382c. In this case, the auxiliary battery housing 400 and the cleaning module 300 may be electrically connected through the coupling terminal 450. Accordingly, through the coupling terminal 450, the power of the auxiliary battery 500 can be supplied to the cleaning module 300.

For example, the coupling terminal 450 may connect the auxiliary battery 500 and the battery 190 in series. With this configuration, the auxiliary battery 500 may be connected in series to the battery 190, and thus, the power can be supplied to the cleaning module 300.

Therefore, when high voltage power is required, the cleaner 1 of the present invention can supply high voltage power to the cleaning module 300 by connecting the auxiliary battery 500 and the battery 190 in series.

As another example, the coupling terminal 450 may connect the auxiliary battery 500 and the battery 190 in parallel. With this configuration, the auxiliary battery 500 may be connected in parallel with the battery 190, and thus, power can be supplied to the cleaning module 300.

Therefore, when large-capacity power is required, the cleaner 1 of the present disclosure can supply large-capacity power to the cleaning module 300 by connecting the auxiliary battery 500 and the battery 190 in parallel.

The battery display unit 460 may be disposed in the auxiliary battery receiver 410 and may display the state of the battery. For example, the battery display unit 460 may be disposed on the front side 411a of the auxiliary battery receiver 410 and may display the usable battery capacity of the auxiliary battery 500. For example, the battery display unit 460 is composed of a ring-shaped light emitting body and may vary the color of light or light emitting areas according to the usable battery capacity.

The input button 470 is disposed in the auxiliary battery receiver 410, and the user can input a command. For example, the input button 470 may be disposed on the front side 411a of the auxiliary battery receiver 410, and may input a control command according to the user's input. The input button 470 may transmit a control signal to a printed circuit board 480 according to a user's touch. Accordingly, the input button 470 can start or end power supply according to the operation of the user.

With this configuration, there is an effect that the user can easily input commands compared to the operation of the operation units 391 and 392 provided in the cleaning module 300.

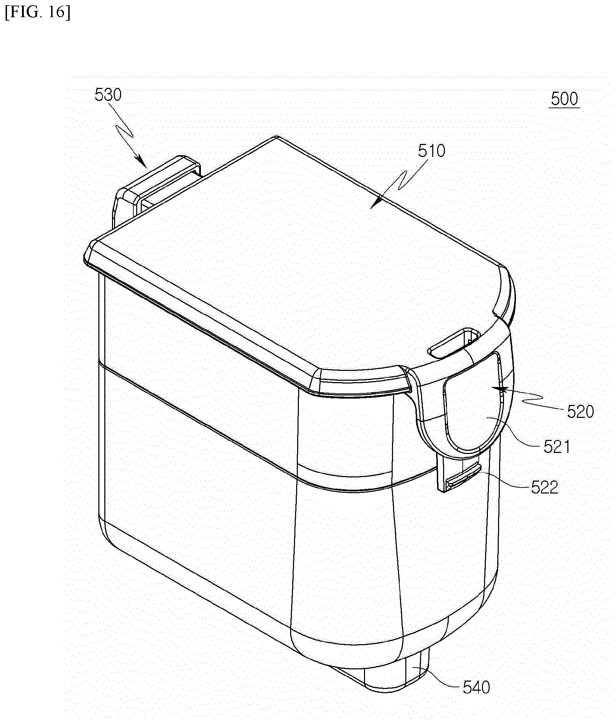

Meanwhile, FIG. 16 is a perspective view for describing the auxiliary battery in the cleaner according to the embodiment of the present disclosure.

Referring to FIG. 16, the auxiliary battery 500 may supply power to the cleaner body 100 or the cleaning module 300. The auxiliary battery 500 may include the auxiliary battery body 510, the first coupling button 520, the second coupling button 530 and the electrical connection portion 540.

The auxiliary battery body 510 may supply power to the cleaner body 100 or the cleaning module 300. The auxiliary battery body 510 may form the exterior of the auxiliary battery 500 and may store electrical energy therein. For example, the auxiliary battery body 510 may be a secondary battery.

The first coupling button 520 may be disposed on one side of the auxiliary battery body 510. The first coupling button 520 may be hook-coupled to the catching protrusion 414 of the auxiliary battery housing 400. For example, the first coupling button 520 may include the first button 521 and the first hook 522. One side end of the first button 521 may be connected to one side of the auxiliary battery body 510. Here, the first button 521 may be formed of a material having elasticity. Also, the first hook 522 may be connected to the other side end of the first button 521 and may protrude in a direction away from the auxiliary battery body 510. The first hook 522 may be hook-coupled to the catching protrusion 414.

With this configuration, when the auxiliary battery 500 is coupled to the auxiliary battery housing 400, the first hook 522 may be hook-coupled to the catching protrusion 414. Further, when the user pulls the auxiliary battery 500 while pressing the first button 521, the auxiliary battery 500 can be separated from the auxiliary battery housing 400.

The second coupling button 530 may be disposed on the other side of the auxiliary battery body 510. The second coupling button 530 may be hook-coupled to a fastening hole (not shown) of the auxiliary battery housing 400. For example, the second coupling button 530 may include a second button 531 and the second hook 532. One side end of the second button 531 may be connected to the other side of the auxiliary battery body 510. Here, the second button 531 may be formed of a material having elasticity. Also, the second hook 532 may be connected to the other side end of the second button 531 and may protrude in the direction away from the auxiliary battery body 510. The second hook 532 may be hook-coupled to the fastening hole.

With this configuration, when the auxiliary battery 500 is coupled to the auxiliary battery housing 400, the second hook 532 may be hook-coupled to the fastening hole. Further, when the user pulls the auxiliary battery 500 while pressing the second button 531, the auxiliary battery 500 can be separated from the auxiliary battery housing 400.

The electrical connecting portion 540 may be provided on the bottom surface of the auxiliary battery body 510. When the auxiliary battery 500 is coupled to the auxiliary battery housing 400, the electrical connecting portion 540 may be electrically connected to a terminal of the auxiliary battery housing 400. With this configuration, when the auxiliary battery 500 is coupled to the auxiliary battery housing 400, the power charged in the auxiliary battery 500 can be supplied to the cleaner body 100 or the cleaning module 300.

Therefore, according to the embodiment of the present disclosure, the auxiliary battery 500 supplies additional power, so that the power can be stably supplied when the cleaning module 300 generates steam.

Although the present invention has been described above by way of the specific embodiments, this is for describing the present invention in detail. The present invention is not limited thereto and it is clear that the present invention can be modified or improved within the spirit of the present invention by those of ordinary skill in the art.

All simple modifications or changes of the present invention fall within the scope of the present invention. The specific scope of protection of the present invention will be apparent by the appended claims.

## Claims

1. A cleaner comprising:
a cleaner body including a battery and a handle gripped by a user;
a cleaning module which is detachably coupled to the cleaner body and removes foreign substances on a floor surface;
an auxiliary battery housing which is detachably coupled to the cleaning module; and
an auxiliary battery which is detachably coupled to the auxiliary battery housing and supplies power to the cleaner body or the cleaning module,
wherein the auxiliary battery housing comprises:
an auxiliary battery receiver in which an auxiliary battery receiving groove into which the auxiliary battery is inserted is formed;
a stopper which is provided in the auxiliary battery receiver in such a manner as to be able to perform a linear reciprocating motion and prevents the auxiliary battery receiver from being separated when coupled to the cleaning module; and
a release button which is provided in the auxiliary battery receiver in such a manner as to be able to perform a linear reciprocating motion and moves the stopper when an external force is applied.

2. The cleaner of claim 1, wherein the release button comprises:
a button portion to which an external force is applied;
a protruding portion which protrudes from the button portion and extends in a direction crossing a longitudinal direction of the stopper; and
an inclined surface which is formed on the protruding portion, forms a predetermined angle with the extending direction of the protruding portion, and comes into contact with the stopper.

3. The cleaner of claim 1, wherein the stopper comprises:
a hook portion which comes into contact with the cleaning module; and
a moving portion which is connected to the hook portion and comes into contact with the release button.

4. The cleaner of claim 1, wherein the auxiliary battery housing comprises a coupling portion which is formed to protrude from the auxiliary battery receiver and is coupled to the cleaning module.

5. The cleaner of claim 4, wherein the coupling portion comprises a first coupling portion including a terminal which is formed to protrude from the auxiliary battery receiver and is electrically connected to the cleaning module.

6. The cleaner of claim 5,
wherein the coupling portion further comprises a second coupling portion which is formed to protrude from the auxiliary battery receiver and is connected to the first coupling portion,
and wherein a protrusion height of the first coupling portion is greater than a protrusion height of the second coupling portion.

7. The cleaner of claim 6,
wherein the stopper comprises a hook portion in contact with the cleaning module,
and wherein the hook portion is exposed on one side of the auxiliary battery receiver from which the second coupling portion is formed to protrude.

8. The cleaner of claim 1,
wherein the cleaning module comprises a connecting tube which is coupled to the auxiliary battery housing,
and wherein the connecting tube comprises:
a connecting tube body; and
a battery connecting portion to which the auxiliary battery housing is coupled in a longitudinal direction of the connecting tube body.

9. The cleaner of claim 8, wherein the connecting tube comprises a hook receiving groove which is formed on a side wall of the battery connecting portion and receives the stopper.

10. The cleaner of claim 1, wherein a direction in which the external force is applied to the release button is parallel to a direction in which the auxiliary battery housing is separated from the cleaning module.
